Europäisches Patentamt

European Patent Office

Office européen des brevets

(19)

(11) **EP 0 504 010 B1**

(12) **FASCICULE DE BREVET EUROPEEN**

(45) Date de publication et mention
de la délivrance du brevet:
**10.01.1996 Bulletin 1996/02**

(51) Int Cl.6: **H02H 7/122**, H02M 3/335

(21) Numéro de dépôt: **92400568.9**

(22) Date de dépôt: **05.03.1992**

(54) **Procédé et dispositif pour la protection contre les surcharges, d'un circuit de conversion électrique**

Verfahren und Vorrichtung zum Schutz gegen Überlaste von elektrischen Umwandlungsschaltungen

Process and apparatus for the protection against overloads of electric conversion circuits

(84) Etats contractants désignés:
**DE GB IT**

(30) Priorité: **14.03.1991 FR 9103087**

(43) Date de publication de la demande:
**16.09.1992 Bulletin 1992/38**

(73) Titulaire: **AEG SCHNEIDER AUTOMATION
F-75016 Paris (FR)**

(72) Inventeur: **Augier, Jean-Louis
F-06950 Falicon (FR)**

(74) Mandataire: **de Saint-Palais, Arnaud Marie et al
F-78960 Voisins le Bretonneux (FR)**

(56) Documents cités:
**DE-A- 3 110 075        US-A- 4 326 245**

**Description**

La présente invention concerne un procédé et un dispositif pour la protection contre les surcharges, d'un circuit de conversion électrique alimenté par un courant pulsé provenant d'une source primaire.

Elle s'applique notamment, mais non exclusivement, à des circuits de conversion tels que des alimentations régulatrices de tension qui doivent être maintenues dans des limites de fonctionnement acceptables pour leurs constituants et qui doivent être aptes à dissiper, sans échauffement excessif leurs pertes maximales possibles.

A cet effet, on utilise habituellement des dispositifs de protection qui agissent sur le circuit de conversion pour en limiter la puissance de sortie lorsque celle-ci (ou bien la puissance débitée par la source) atteint un seuil prédéterminé. Ces dispositifs comprennent, de façon classique, des moyens permettant de calculer cette puissance ainsi que des moyens permettant de la comparer à une valeur de seuil. Des moyens sont en outre prévus pour transmettre au convertisseur un signal provoquant ladite limitation lorsque cette puissance de sortie atteint ledit seuil.

Dans le cas où le convertisseur ne présente qu'une seule sortie régulée en tension, le contrôle de la puissance se limite à la mesure du courant fourni.

Toutefois ces principes simples ne peuvent être appliqués que dans le cas où la régulation est suffisamment précise.

Par contre, ils ne peuvent pas être appliqués à un convertisseur multisorties dans lequel certaines sorties ne sont pas régulées et fluctuent de façon importante.

Il en va de même, lorsque la puissance totale que l'on veut maîtriser est inférieure à la somme des puissances maxima pouvant être délivrées par chacune des sorties, ce qui est le cas dans de nombreuses alimentations du commerce.

Dans ces différents cas qui ne permettent pas d'obtenir, par simple mesure, une information relative à la puissance de sortie, il est nécessaire d'utiliser des circuits de calcul dont le coût croît rapidement en fonction de la précision obtenue.

Ceci tient au fait que le calcul d'une puissance P = UxI exige habituellement l'emploi d'un multiplieur coûteux qui effectue un produit tension x intensité de courant.

Or, une mauvaise précision dans le calcul de cette puissance engendre une imprécision correspondante du fonctionnement du circuit de protection qui implique un surdimensionnement et donc un surcoût de ce convertisseur, si l'on veut demeurer dans les conditions limites de fonctionnement précédemment évoquées.

Le brevet US-A-4 326 245 décrit un dispositif pour la protection contre les surcharges d'un convertisseur présentant les caractéristiques définies dans le préambule de la revendication 7, faisant intervenir un comparateur qui compare la tension de sortie du convertisseur à une tension de référence et qui commande le courant primaire pulsé du convertisseur en fonction du résultat de cette comparaison. La tension de référence peut être réduite dans le cas où la valeur moyenne de l'intensité du courant primaire pulsé du convertisseur s'élève au-dessus d'une valeur de seuil, et ce, en vue de réduire la tension de sortie du convertisseur.

Le brevet DE-A-3 110 075 propose d'effectuer une limitation de la puissance transmise par le convertisseur en fonction de la comparaison entre une première tension représentative de la valeur instantanée du courant primaire pulsé et une seconde tension proportionnelle au rapport cyclique du courant primaire pulsé.

L'invention a pour but de procurer un procédé et un dispositif de protection contre les surcharges d'un convertisseur permettant de réduire le coût du dispositif de protection tout en assurant une précision élevée et donc sans nécessiter un surdimensionnement du convertisseur.

Pour parvenir à ce résultat, elle propose un procédé pour la protection contre les surcharges d'un convertisseur électrique alimenté par un courant provenant d'une source primaire et pulsé selon un premier rapport cyclique, ce procédé consistant :

- à élaborer une première tension représentative de la valeur moyenne du courant pulsé ou du produit de cette valeur moyenne par un second rapport cyclique dérivé du courant pulsé,
- à élaborer une seconde tension représentative du produit de la puissance utile maximum du convertisseur et du premier rapport cyclique, et
- à comparer lesdites première et seconde tensions et à effectuer une limitation de la puissance fournie par le convertisseur lorsque la première tension devient supérieure à la seconde.

L'invention permet de tirer parti :

- d'une part, du fait que, dans tout dispositif de conversion d'énergie à découpage régulé, la boucle d'asservissement réalise une conversion tension d'entrée/rapport cyclique, ce dernier étant accessible au niveau de la commande du découpeur ; et
- d'autre part, du fait que le produit tension x rapport cyclique est très facile à obtenir à l'aide d'un simple circuit intégrateur.

L'invention concerne également un dispositif pour la mise en oeuvre du procédé, ce dispositif assurant la protection contre les sucharges d'un convertisseur alimenté par un courant provenant d'une source primaire et pulsé selon un premier rapport cyclique, et comprenant à cet effet une première cellule de filtrage sur laquelle est appliquée une tension représentative de l'intensité dudit courant pulsé, cette première cellule de filtrage étant conçue de manière à fournir une tension de sortie représentative de la valeur moyenne de ladite intensité, et un comparateur qui compare une première tension, fonction de ladite tension de sortie, à une seconde tension, fonction d'une tension de référence, ce comparateur délivrant un signal de défaut destiné à commander une limitation de la puissance délivrée par le convertisseur lorsque la première tension atteint ou dépasse la seconde tension.

Ce dispositif est caractérisé en ce qu'il comprend :

- un premier circuit intégrateur dont l'entrée peut être alternativement connectée grâce à un premier commutateur, à la sortie de la première cellule de filtrage et à un potentiel de référence, ce premier circuit intégrateur permettant de délivrer à sa sortie la première tension laquelle est représentative du produit de ladite tension de sortie par un rapport cyclique dérivé du courant pulsé ;

- un second circuit intégrateur dont l'entrée peut être alternativement connectée grâce à un second commutateur à la tension de référence et à un potentiel de référence, ce second circuit intégrateur permettant de délivrer sur sa sortie la seconde tension qui est représentative du produit de la tension de référence par ledit premier rapport cyclique.

Des modes de réalisation de dispositifs de protection mettant en oeuvre le procédé selon l'invention seront décrits ci-après, à titre d'exemples non limitatifs, avec référence aux dessins annexés dans lesquels :

La figure 1 est un schéma permettant d'illustrer le principe de fonctionnement d'un dispositif de protection selon l'invention appliqué à un dispositif d'alimentation à découpage, en phase directe (convertisseurs de type Forward, Demi-pont, Pont) ;

La figure 2 est un schéma permettant d'illustrer le principe de fonctionnement d'un dispositif de protection équipant un dispositif d'alimentation à découpage de type fly back ;

Les figures 3 et 4 sont des diagrammes représentatifs des variations en fonction du temps des intensités $I_P$ et $I_S$ ainsi que de la tension VL du circuit représenté figure 2, dans le cas d'une inductance jamais démagnétisée (figure 3) et dans le cas où l'inductance est périodiquement démagnétisée (figure 4) ;

La figure 5 est un schéma d'un exemple de réalisation d'un circuit de détection de puissance limite utilisable pour une alimentation à découpage du type de celles décrites sur les figures 1 et 2 ;

La figure 6 représente une alimentation à découpage de type fly back, à inductance périodiquement démagnétisée, équipée d'un circuit permettant d'obtenir un signal crénelé de période T et dont la durée des créneaux est égale à toff-tm ;

La figure 7 est le schéma d'un circuit électronique simple permettant d'effectuer un produit d'une tension par un temps.

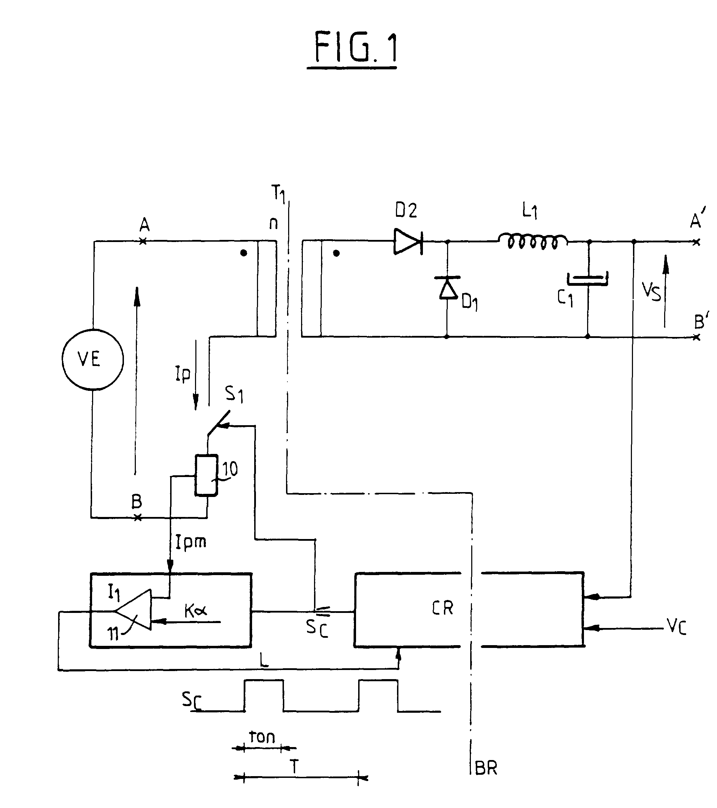

L'alimentation à découpage représentée sur la figure 1 comprend un circuit primaire alimenté par une source de tension VE et comprenant en série sur les bornes AB de cette source, le primaire d'un transformateur $T_1$, un interrupteur commandable $S_1$ et une cellule de détection et de filtrage 10 du courant $I_P$ circulant dans ce circuit primaire.

Le secondaire du transformateur $T_1$ est relié, par l'une de ses bornes, à une borne de sortie A' de l'alimentation par l'intermédiaire d'un circuit comprenant en série une diode D2 montée en direct et une inductance $L_1$. L'autre borne du secondaire est connectée :

- à la seconde borne B' de l'alimentation, par une liaison conductrice directe ;

- à la jonction entre la diode $D_2$ et l'inductance $L_1$, par l'intermédiaire d'une deuxième diode $D_1$ et à la borne de sortie A', par l'intermédiaire d'un condensateur $C_1$ qui constitue un filtre avec l'inductance $L_1$.

Les sens d'enroulement des bobines du transformateur $T_1$ sont prévus de manière à ce que le transfert d'énergie au secondaire ait lieu pendant l'établissement du courant $I_P$.

L'interrupteur $S_1$ est périodiquement fermé pendant un temps ton et ouvert pendant un temps toff, selon une période de découpage T, sous l'effet d'un signal de commande crénelé $S_C$ émis par un circuit de régulation $C_R$.

Ce circuit $C_R$ sert à régler le rapport cyclique

$$\alpha = \frac{ton}{T}$$

du signal de commande en fonction de l'écart entre la tension de sortie $V_S$ présente entre les bornes A', B' et une valeur de consigne $V_C$. Avantageusement, ce circuit $C_R$ sera conçu de manière à assurer une isolation galvanique entre primaire et secondaire (barrière d'isolement BR passant par $T_1$ et représentée en traits interrompus).

Si l'on désigne par IPm la valeur moyenne du courant primaire et par n le rapport de transformation, la tension de sortie $V_S$ a pour expression :

$$V_S = \alpha \times VE \times n$$

tandis que la puissance absorbée à la source Pa a pour expression

$$Pa = VE \times IPm = V_S \times IPm/\alpha n$$

La condition "Puissance utile" ≤ "Puissance de consigne" que l'invention cherche à réaliser pour assurer la protection du circuit d'alimentation peut alors s'écrire :

$$Pa = V_S \times IPm/\alpha n \leq \text{"Puissance de consigne"}$$

La puissance de consigne étant en principe prévue égale à la puissance utile de sortie, maximum.

Cette condition se ramène à la condition suivante :

$$IPm \leq K \times \alpha$$

dans laquelle K est une constante fonction du rendement $\eta$ ayant pour expression :

$$K = \text{"Puissance de consigne"} \times n/V_S \times \eta$$

Dans le but de réaliser la condition "Puissance utile" $\leq$ Puissance de consigne" l'invention propose simplement de comparer une tension image de Ipm à une tension proportionnelle à $\alpha$.

Dans l'exemple représenté sur la figure 1, la valeur IPm (intensité moyenne du courant délivré par la source) est mesurée par une cellule de détection et de filtrage 10 monté en série avec l'interrupteur $S_1$, tandis que la tension $K\alpha$ proportionnelle au rapport cyclique $\alpha$ est élaborée à partir du signal de commande de commutation $S_C$ délivré par le circuit de régulation $C_R$.

Le circuit de protection selon l'invention comprend donc un comparateur 11 qui reçoit sur ses deux entrées, respectivement le signal IPm et le signal $K \times \alpha$.

Lorsque la valeur IPm atteint la valeur $K\alpha$, le comparateur transmet au circuit de régulation $C_R$ un signal de limitation L ayant pour effet de limiter la puissance délivrée par l'alimentation.

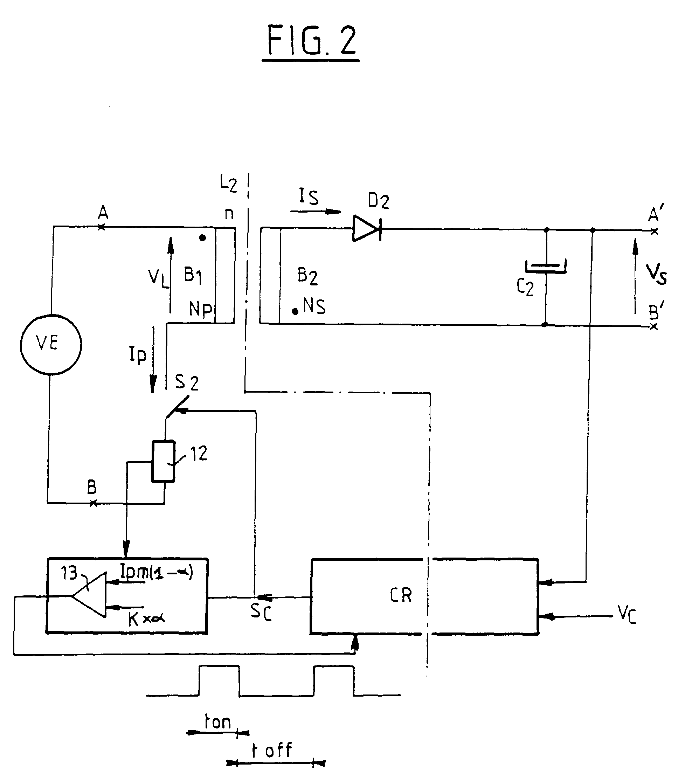

La figure 2 représente une alimentation de type Fly Back dans laquelle le quadripôle comprend un circuit primaire connecté entre les bornes A et B de la source de courant continu VE, ce circuit comprenant en série avec l'enroulement primaire $B_1$ d'une inductance $L_2$, un interrupteur commandable $S_2$, et une cellule de détection et de filtrage 12 apte à déterminer le courant moyen IPm qui la traverse.

Le circuit secondaire de cette alimentation comprend, en série entre les bornes de sortie A', B', un enroulement secondaire $B_2$ de l'inductance $L_2$ et une diode $D_2$ en sens direct. Un condensateur de filtrage $C_2$ est en outre disposé entre ces bornes A', B'.

Dans un tel circuit, l'énergie transmise lors de la fermeture de l'interrupteur $S_2$ est, dans une première phase, (phase de magnétisation), stockée dans l'inductance $L_2$ puis est transférée à la charge au cours d'une deuxième phase (phase de démagnétisation).

Comme dans l'exemple précédent, l'interrupteur $S_2$ est commandé par un circuit de régulation $C_R$ destiné à maintenir la tension de sortie $V_S$ à une valeur de consigne.

L'alimentation décrite sur cette figure présente en fait deux modes de fonctionnement, à savoir :

- un premier mode de fonctionnement au cours duquel l'inductance $L_2$ ne reste jamais démagnétisée ; et

- un deuxième mode de fonctionnement au cours duquel l'inductance $L_2$ demeure à l'état démagnétisée, pendant une période de temps non nulle.

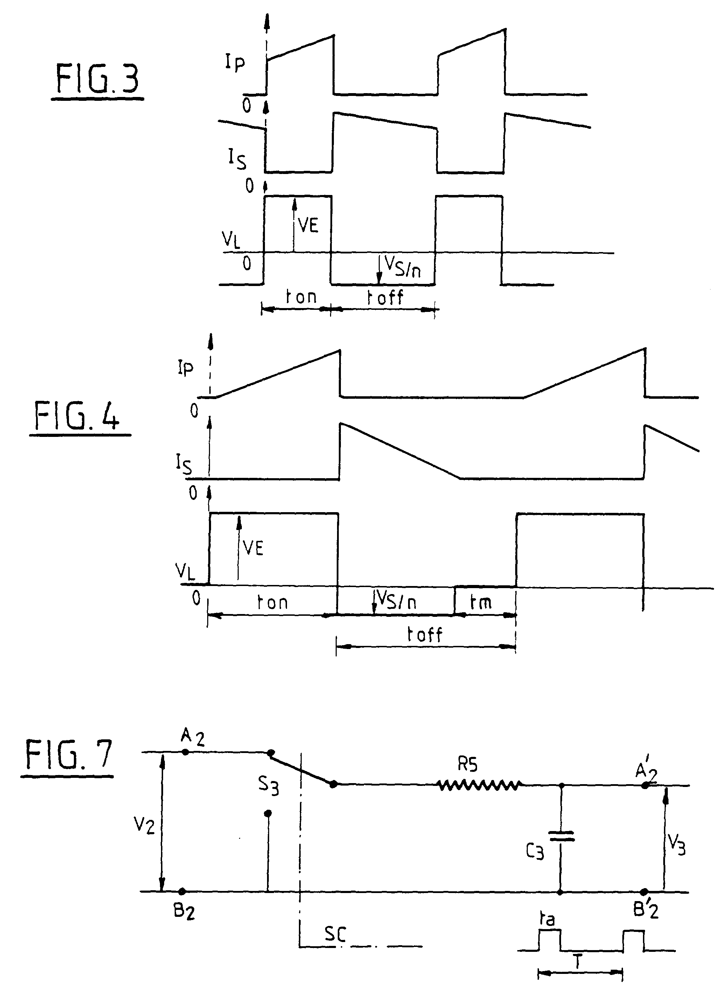

La figure 3 montre la variation dans le temps du courant primaire $I_P$, du courant secondaire $I_S$ ainsi que de la tension $V_L$ du circuit représenté figure 2.

Comme on peut le voir, les courants $I_P$ et $I_S$ sont des courants pulsés de forme trapézoïdale, le courant $I_S$ étant nul au cours des temps de fermeture ton de l'interrupteur $S_2$, à l'inverse du courant $I_P$ qui est nul au cours du temps toff d'ouverture de l'interrupteur $S_2$. La tension $V_L$ aux bornes de l'enroulement primaire $B_1$ ne présente jamais une valeur nulle. Pendant le temps de fermeture de l'interrupteur, elle possède une valeur U, tandis que pendant le temps d'ouverture de l'interrupteur (phase de démagnétisation) elle présente une valeur $- V_S/n$ (n étant le rapport de transformation $n = N_S/N_P$ = nombre de tours du secondaire nombre de tours du primaire ).

Du fait du principe de la conservation de l'énergie la tension moyenne aux bornes de l'enroulement primaire $B_1$ est nulle, ce qui s'exprime par la relation suivante :

$$VE \times ton - V_S \times toff/n = 0$$

La tension VE a alors pour expression :

$$VE = V_S \frac{1}{n} \times \frac{toff}{ton} = V_S \times \frac{1 - \alpha}{\alpha \times n}$$

avec $\alpha = ton/T$ et $(1 - \alpha) = toff/T$.

$\eta$ étant le rendement de l'alimentation, la puissance utile Pu peut alors s'écrire :

$$Pu = \eta \times IPm \times VE = IPm \times VS \times \frac{\eta}{n} \times \frac{1 - \alpha}{\alpha}$$

La condition pour laquelle la puissance utile ne saurait dépasser une valeur de consigne peut alors s'écrire de façon équivalente :

$$IPm \times (1 - \alpha) \leq K \alpha$$

dans laquelle K est une constante ayant pour expression :

$$K = \text{"Puissance de consigne"} \times \frac{n}{\eta V_S}$$

Cette condition peut être facilement réalisée en comparant une tension proportionnelle à l'intensité IPm et au rapport cyclique $(1 - \alpha)$, à une tension proportionnelle au rapport cyclique $\alpha$.

Ici aussi, le circuit de protection selon l'invention fait intervenir un comparateur 13 qui reçoit sur ses deux entrées, respectivement, une tension représentative du produit IPm $(1 - \alpha)$ et une tension représentative du produit $K \alpha$, les grandeurs $(1 - \alpha)$ et $\alpha$ étant prélevées à partir du signal de commande de commutation de l'interrupteur $S_2$.

D'une façon analogue à la précédente, le comparateur 13 agit sur le circuit de régulation $C_R$ pour limiter la puissance de l'alimentation lorsque le produit IPm $(1 - \alpha)$ devient égal ou supérieur au produit $K \alpha$.

Dans le cas où l'alimentation représentée sur la figure 2 fonctionne selon le deuxième mode de fonctionnement (inductance démagnétisée) les courants $I_P$ et $I_S$ sont des courants pulsés de forme triangulaire, sensiblement en opposition de phase (figure 4). La tension $V_L$ prend la valeur VE au cours du temps ton. Au cours du temps toff, elle passe tout d'abord à une valeur - VS/n puis s'annule pendant un temps tm inclus dans toff.

Dans ce cas, toutes les relations établies pour le premier mode de fonctionnement demeurent valables à condition toutefois de remplacer le temps toff par toff-tm et le rapport cyclique (1 - $\alpha$) par (1 - $\alpha$ - tm/T) = 1 - $\beta$ avec $\beta = \alpha + tm/T$.

La condition à respecter si l'on veut que la puissance utile demeure en dessous d'une valeur de consigne est alors :

$$IPm \times (1 - \beta) \leq K \alpha$$

Au niveau du circuit représenté figure 2, il suffit d'appliquer sur les deux entrées du comparateur 13, respectivement des tensions représentatives de IPm (1 - $\beta$) et K $\alpha$.

La tension représentative de K $\alpha$ est obtenue à partir du signal de commande de l'interrupteur de découpage $S_2$.

L'élaboration d'une grandeur représentative de l'intervalle de temps toff - tm est basée sur le fait que tant que la démagnétisation de l'inductance n'est pas complète, une tension est présente aux bornes des enroulements de l'inductance.

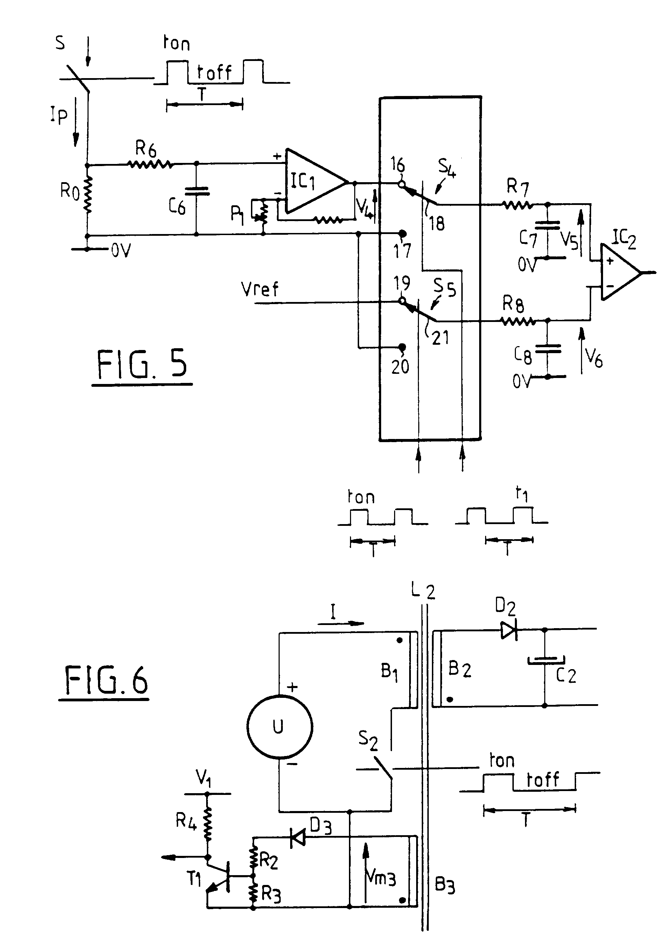

Ainsi, grâce à un dispositif du type de celui représenté sur la figure 6, il est possible d'obtenir un signal crénelé dans lequel chaque créneau présente une largeur représentative de l'intervalle toff - tm.

Ce dispositif peut comprendre, comme représenté, un enroulement secondaire $B_3$ de l'inductance $L_2$, aux bornes duquel sont montés en série une diode $D_3$ et un pont diviseur de tension $R_2$, $R_3$ qui assure la polarisation de la base d'un transistor NPN $T_1$. Le collecteur de ce transistor $T_1$ est relié à une source de tension continue $V_1$ par l'intermédiaire d'une résistance $R_4$, tandis que son émetteur est relié à la masse.

Ainsi, pendant chacune des phases de démagnétisation de l'inductance $L_2$ (toff-tm) le transistor $T_1$ polarisé par le courant circulant dans le sens passant de la diode $D_3$ sera conducteur et sa tension émetteur/collecteur sera sensiblement nulle. Par contre, pendant les phases de magnétisation ton, de même que pendant les périodes tm où la tension aux bornes de l'inductance $L_2$ s'annule, le transistor $T_1$ dont la base est portée au potentiel de la masse (aucun courant ne circulant dans le pont) aura une tension émetteur collecteur sensiblement au niveau de celle de la source.

On obtient donc, sur le collecteur du transistor $T_1$ un signal crénelé dont l'intervalle entre les créneaux est égal à toff-tm.

La réalisation d'un produit tension x rapport cyclique tel que le produit Ipm x (1 - $\alpha$), le produit K x $\alpha$ ou même le produit Ipm (1 - $\beta$) peut être obtenue au moyen d'un circuit électronique simple tel que celui représenté sur la figure 7 qui consiste en un quadripôle comprenant deux entrées $A_2$, $B_2$ respectivement connectées à deux contacts fixes d'un commutateur $S_3$, et deux bornes de sortie $A'_2$, $B'_2$ dont l'une est directement reliée à la borne d'entrée, tandis que l'autre est reliée au contact mobile du

commutateur $S_3$ par l'intermédiaire d'une résistance $R_5$. Cette résistance $R_5$ fait partie d'un filtre $R_5$, $C_3$ dont le condensateur $C_3$ est monté entre les deux bornes $A'_2$, $B'_2$.

La tension $V_2$ que l'on veut multiplier par un rapport cyclique ta/T est appliquée entre les bornes d'entrée $A_2$, $B_2$ tandis que le commutateur $S_3$ est commandé par un signal crénelé de période T et dont chaque créneau est de durée ta. Pendant chaque créneau, le commutateur $S_3$ aiguille la tension $V_2$ à multiplier sur la cellule de filtrage $R_5$, $C_3$ tandis que pendant les intervalles compris entre les créneaux, le commutateur $S_3$ applique à la cellule $R_5$, $C_3$ une tension nulle.

La tension $V_3$ aux bornes $A'_2$, $B'_2$ du circuit aura alors pour expression

$$V_3 = V_2 \times ta/T + 0 \times to/T$$

$$= V2 \times \alpha$$

$$= \frac{V_2}{T} \times ta$$

où T = ta + to
$\alpha$ étant le rapport cyclique du signal crénelé ta/T

Il apparaît donc que grâce à un tel circuit, il est possible d'effectuer très simplement et à un faible coût le produit d'une tension $V_2$ par un rapport cyclique $\alpha$ d'un signal crénelé.

Ce circuit est mis à profit dans le dispositif de détection de puissance limite représenté figure 5 qui est utilisable dans un circuit de protection tel que ceux représentés sur les figures 1 et 2.

Dans cet exemple, seul l'interrupteur de découpage S de l'alimentation à découpage, en série avec une résistance $R_o$ de détection de courant a été représenté, étant entendu que cette alimentation peut être de type en phase directe, comme représenté figure 1, de type fly back à inductance jamais démagnétisée ou démagnétisée, comme représenté figure 2.

La tension aux bornes de la résistance $R_o$ est appliquée à une cellule de filtrage comprenant une résistance $R_6$ et un condensateur $C_6$ dont des valeurs sont déterminées de manière à obtenir, aux bornes du condensateur $C_6$, une tension représentative de la valeur moyenne IPm du courant $I_p$ circulant dans le primaire de l'alimentation à découpage.

Ce condensateur $C_6$ est, par ailleurs, connecté aux deux entrées d'un amplificateur opérationnel $IC_1$ dont le gain est ajustable grâce à un potentiomètre $P_1$ et qui délivre une tension de sortie continue $V_4$ réglable.

Cette tension $V_4$ est appliquée à l'une des deux entrées 16 d'un commutateur $S_4$ dont l'autre entrée 17 est connectée à la masse (tension OV). La sortie 18 de ce commutateur $S_4$ est reliée à une cellule de filtrage comprenant en série une résistance $R_7$ et un condensateur $C_7$ connecté à la masse. L'ensemble commutateur $S_4$-cellule de filtrage $R_7$, $C_7$ constitue un dispositif permettant de multiplier la tension $V_4$, représentative de l'in-

tensité IPm par un premier facteur pouvant être le rapport cyclique $(1 - \alpha)$ du signal de commande de l'interrupteur S ou le rapport cyclique $(1 - \beta)$ précédemment évoqué.

La tension $V_5$ aux bornes du condensateur $C_7$ (qui est représentative du susdit produit) est appliquée à l'entrée directe d'un amplificateur opérationnel $IC_2$ faisant office de comparateur.

L'entrée inverseuse de l'amplificateur $IC_2$ reçoit, quant à elle, la tension de sortie $V_6$ d'un circuit du type de celui représenté sur la figure 7 qui effectue le produit d'une tension de référence $V_{ref}$ par un deuxième rapport cyclique de même type que le premier.

Ce circuit comprend un commutateur $S_5$ dont l'une des entrées 19 est connectée à une source de tension $V_{ref}$ et dont l'autre entrée 20 est connectée à la masse (OV). La sortie 21 est reliée à une cellule de filtrage comprenant en série une résistance $R_8$ et un condensateur $C_8$ connecté à la masse. La tension $V_6$ présente à la jonction entre la résistance $R_8$ et le condensateur $C_8$ est appliquée à l'entrée négative de l'amplificateur opérationnel $IC_2$.

Dans le cas où l'alimentation effectue une conversion en phase directe (cas du circuit représenté figure 1), la sortie 18 du commutateur $S_4$ est reliée en permanence à l'entrée 16 tandis que le commutateur $S_5$ est commandé par le signal de commande SC de l'interrupteur S, de manière à appliquer à la cellule $R_8$, $C_8$ la tension $V_{ref}$ pendant les temps ton de ce signal de commande SC.

Dans ce cas, l'amplificateur $IC_2$ comparera la tension $V_4$ qui est représentative de l'intensité moyenne IPm et la tension $V_6$ qui est alors représentative (à un gain près) du rapport cyclique $\alpha$ du signal de commande SC de l'interrupteur de découpage S.

L'amplificateur $IC_2$ est conçu de manière à délivrer un signal de défaut dans le cas où la tension $V_5$ devient égale ou supérieure à la tension $V_6$.

Dans le cas où l'alimentation est de type "fly back" à démagnétisation incomplète, le commutateur $S_4$ est commandé par le signal de commande SC de manière à appliquer la tension $V_4$ sur la cellule $R_7$, $C_7$ pendant les temps toff du signal de commande SC. Le commutateur $S_5$ est commandé par ce même signal SC mais de manière à appliquer à la cellule $R_8$, $C_8$ la tension $V_{ref}$ pendant les temps ton du signal de commande SC.

Dans ce cas, le comparateur $IC_2$ compare la tension $V_4$ qui est représentative du produit IPm x $(1 - \alpha)$ à la tension $V_6$ qui est représentative de la tension $V_{ref}$ multipliée par le rapport cyclique $\alpha$ (réalisation de la condition IPm x $(1 - \alpha) \leq K \alpha$).

Dans le cas où l'alimentation est de type "fly back" à inductance périodiquement démagnétisée, le commutateur $S_4$ est commandé par un signal du type de celui produit par le circuit représenté figure 6, de manière à appliquer la tension V4 sur la cellule $R_7$, $C_7$ pendant les intervalles de temps toff-tm du courant pulsé circulant dans l'inductance $L_2$. Le commutateur $S_5$ est, quant à

lui, commandé par le signal de commande SC de l'interrupteur I, de manière à appliquer à la cellule $R_8$, $C_8$ la tension $V_{ref}$ pendant les temps ton.

Le comparateur $IC_2$ vérifie alors la condition :

$$IPm \ x \ (1 - \beta) \leq K \ \alpha$$
$$où \ \beta = (ton - tm)/T$$

et transmet un signal de défaut si cette condition n'est pas réalisée.

## Revendications

1. Procédé pour la protection contre les surcharges d'un convertisseur électrique alimenté par un courant $(I_p)$ provenant d'une source primaire $(V_E)$ et pulsé selon un premier rapport cyclique $(\alpha)$, ce procédé consistant :

   - à élaborer une première tension représentative de la valeur moyenne (Ipm) du courant pulsé ou du produit de cette valeur moyenne (Ipm) par un second rapport cyclique dérivé du courant pulsé,

   - à élaborer une seconde tension $(K\alpha)$ représentative du produit de la puissance utile maximum du convertisseur et du premier rapport cyclique $(\alpha)$, et

   - à comparer lesdites première et seconde tensions et à effectuer une limitation de la puissance fournie par le convertisseur lorsque la première tension devient supérieure à la seconde.

2. Procédé selon la revendication 1, caractérisé en ce que ledit premier rapport cyclique $(\alpha)$ du courant pulsé est réglé de manière à maintenir constante la tension de sortie du convertisseur.

3. Procédé selon l'une des revendications 1 et 2, caractérisé en ce que le convertisseur électrique est de type à conversion en phase directe, en ce que la susdite première tension est représentative de la valeur moyenne (Ipm) du courant pulsé, et en ce que la susdite seconde tension est représentative de la puissance utile maximum du convertisseur, multipliée par ledit premier rapport cyclique $(\alpha)$ du courant pulsé et par le rapport de transformation (n) du convertisseur, et divisée par le produit de la tension de sortie $(V_S)$ du convertisseur par le rendement $(\eta)$ du convertisseur.

4. Procédé selon l'une des revendications 1 et 2, caractérisé en ce que le convertisseur électrique est de type fly-back à inductance jamais démagnétisée, en ce que la susdite première tension est représentative du produit de la valeur moyenne (IPm) du courant pulsé par le rapport cyclique $(1 - \alpha)$ des inter-

ruptions de ce courant et en ce que la susdite seconde tension est représentative de la puissance utile maximum du convertisseur multipliée par le rapport de transformation (n) et par ledit premier rapport cyclique ($\alpha$) et divisée par le produit de la tension de sortie ($V_S$) du convertisseur par le rendement ($\eta$) de ce convertisseur.

5. Procédé selon l'une des revendications 1 et 2, caractérisé en ce que le convertisseur électrique est de type fly-back à inductance périodiquement démagnétisée et en ce que la susdite première tension est représentative du produit :

$$IPm \times (toff-tm)/T$$

IPm étant la valeur moyenne du courant pulsé,

toff représentant l'intervalle de temps entre les impulsions du courant pulsé, et

tm représentant la période de temps au cours de laquelle la tension aux bornes de l'enroulement primaire ($B_1$) de l'inductance ($L_2$) du convertisseur s'annule,

T représentant la période de découpage dudit courant pulsé, et en ce que la susdite deuxième tension est représentative du produit :

$$K \times ton/T$$

K étant une valeur représentative de la puissance utile maximum du convertisseur multipliée par le rapport de transformation (n) du convertisseur et divisée par le produit de la tension de sortie ($V_S$) du convertisseur et du rendement ($\eta$) de ce convertisseur.

6. Procédé selon l'une des revendications précédentes, caractérisé en ce que les produits entre une valeur et un rapport cyclique sont obtenus en aiguillant alternativement une tension représentative de ladite valeur et un potentiel de référence (OV) sur une cellule de filtrage de type intégrateur pendant des laps de temps respectifs représentatifs dudit rapport cyclique.

7. Dispositif pour la mise en oeuvre du procédé selon l'une des revendications précédentes, ce dispositif assurant la protection contre les surcharges d'un convertisseur alimenté par un courant provenant d'une source primaire ($V_E$) et pulsé selon un premier rapport cyclique ($\alpha$), et comprenant à cet effet une première cellule de filtrage ($R_6$,$C_6$, $IC_1$) sur laquelle est appliquée une tension representative de l'intensité ($I_P$) dudit courant pulsé, cette première cellule de filtrage ($R_6$,$C_6$, $IC_1$) étant conçue de manière à fournir une tension de sortie ($V_4$) représentative de la valeur moyenne (IPm) de ladite intensité ($I_P$), et un comparateur ($IC_2$) qui compare une première tension ($V_5$), fonction de ladite tension de sortie ($V_4$), à une seconde tension ($V_6$), fonction d'une tension de référence ($V_{ref}$), ce comparateur ($IC_2$) délivrant un signal de défaut destiné à commander une limitation de la puissance délivrée par le convertisseur lorsque la première tension ($V_5$) atteint ou dépasse la seconde tension ($V_6$),
caractérisé en ce qu'il comprend :

- un premier circuit intégrateur ($R_7$, $C_7$) dont l'entrée peut être alternativement connectée grâce à un premier commutateur ($S_4$), à la sortie de la première cellule de filtrage ($R_6$,$C_6$, $IC_1$) et à un potentiel de référence (OV), ce premier circuit intégrateur ($R_7$, $C_7$) permettant de délivrer à sa sortie la première tension ($V_5$) laquelle est représentative du produit de ladite tension de sortie ($V_4$) par un rapport cyclique dérivé du courant pulsé ;
- un second circuit intégrateur ($R_8$, $C_8$) dont l'entrée peut être alternativement connectée grâce à un second commutateur ($S_5$) à la tension de référence ($V_{ref}$) et à un potentiel de référence (OV), ce second circuit intégrateur ($R_8$, $C_8$) permettant de délivrer sur sa sortie la seconde tension ($V_6$) qui est représentative du produit de la tension de référence ($V_{ref}$) par ledit premier rapport cyclique ($\alpha$).

8. Dispositif selon la revendication 7 pour un convertisseur effectuant une conversion en phase directe, caractérisé en ce que le susdit premier commutateur ($S_4$) est commandé de manière à appliquer de façon continue sur l'entrée du premier circuit intégrateur ($R_7$, $C_7$) la tension représentative de l'intensité moyenne (IPm) du courant pulsé, et en ce que le second commutateur ($S_5$) est commandé de manière à transmettre la tension de référence ($V_{ref}$) au second circuit intégrateur ($R_8$, $C_8$) pendant des périodes de temps ton correspondant aux impulsions du courant pulsé et une tension nulle pendant des périodes de temps toff correspondant aux intervalles compris entre les impulsions dudit courant.

9. Dispositif selon la revendication 7 pour un convertisseur du type fly-back à démagnétisation imcomplète,
caractérisé en ce que le premier commutateur ($S_4$) est commandé de manière à appliquer sur l'entrée du premier circuit intégrateur ($R_7$, $C_7$) la tension représentative de l'intensité moyenne (IPm) du courant pulsé (Ip) pendant les périodes de temps toff correspondant aux intervalles compris entre les impulsions du courant pulsé et une tension nulle pendant les périodes de temps ton correspondant auxdites impulsions, et en ce que le deuxième commutateur ($S_5$) est commandé de manière à appliquer sur l'entrée du deuxième circuit intégrateur ($R_8$, $C_8$) la tension de référence ($V_{ref}$) pendant les périodes de temps ton correspondant auxdites impulsions, et une tension nulle pendant les périodes de temps toff correspondant aux intervalles entre les impulsions.

10. Dispositif selon la revendication 7 pour un convertisseur du type fly-back à démagnétisation complète,
caractérisé en ce que le premier commutateur ($S_4$) est commandé de manière à appliquer sur l'entrée du premier circuit intégrateur ($R_7$, $C_7$) la tension représentative de l'intensité moyenne (IPm) du courant primaire pulsé (Ip), pendant les intervalles toff-tm de la période (T) du courant pulsé, toff étant l'intervalle de temps compris entre les impulsions du courant pulsé et tm étant le temps de cette période pendant lequel la tension aux bornes de l'enroulement primaire ($B_1$) de l'inductance ($L_2$) du convertisseur s'annule, et en ce que le second commutateur ($S_5$) est commandé de manière à appliquer sur l'entrée du deuxième circuit intégrateur ($R_8$, $C_8$) la tension de référence ($V_{ref}$) pendant les périodes de temps ton correspondant auxdites impulsions, et une tension nulle pendant les périodes de temps toff correspondant aux intervalles entre les impulsions.

11. Dispositif selon l'une des revendications 7 à 10, caractérisé en ce que la susdite première cellule de filtrage comprend un circuit comportant en série une résistance ($R_6$) et un condensateur ($C_6$) relié à la masse, la tension présente à la jonction entre cette résistance ($R_6$) et ce condensateur ($C_6$) étant appliquée à l'entrée d'un amplificateur opérationnel ($IC_1$) à gain ajustable.

12. Dispositif selon la revendication 10,
caractérisé en ce que le premier commutateur ($S_4$) est commandé par un signal prélevé sur le collecteur d'un transistor ($T_1$) dont la base est polarisée par un pont diviseur de tension ($R_2$, $R_3$) monté en série dans un circuit comprenant une diode ($D_3$) et un enroulement secondaire ($B_3$) de l'inductance ($L_2$) du convertisseur dont l'enroulement primaire ($B_1$) est parcouru par ledit courant pulsé provenant de la source primaire (VE).

**Patentansprüche**

1. Verfahren zum Schutz gegen Überlastungen für einen elektrischen Wandler, der mit einem Strom (Ip) gespeist wird, welcher von einer Primärquelle (VE) kommt und gemäß einem ersten zyklischen Verhältnis ($\alpha$) gepulst wird, wobei dieses Verfahren darin besteht:

- eine erste Spannung zu erzeugen, die für den Mittelwert (Ipm) des gepulsten Stroms oder das Produkt dieses Mittelwerts (Ipm) mit einem zweiten zyklischen Verhältnis, das vom gepulsten Strom abgeleitet wird, repräsentativ ist,

- eine zweite Spannung ($K\alpha$) zu erzeugen, die für das Produkt der maximalen Nutzleistung des Wandlers und des ersten zyklischen Verhältnisses ($\alpha$) repräsentativ ist, und

- die erste und die zweite Spannung zu vergleichen und eine Begrenzung der vom Wandler gelieferten Leistung durchzuführen, wenn die erste Spannung größer wird als die zweite.

2. Verfahren nach Anspruch 1, dadurch gekennzeichnet, daß das erste zyklische Verhältnis ($\alpha$) des gepulsten Stroms so eingestellt ist, daß die Ausgangsspannung des Wandlers konstant gehalten wird.

3. Verfahren nach einem der Ansprüche 1 und 2, dadurch gekennzeichnet, daß der elektrische Wandler von der Art mit Umwandlung in direkter Phase ist, daß die erste Spannung für den Mittelwert (Ipm) des gepulsten Stroms repräsentativ ist und daß die zweite Spannung für die maximale Nutzleistung des Wandlers repräsentativ ist, multipliziert mit dem ersten zyklischen Verhältnis ($\alpha$) des gepulsten Stroms und dem Übersetzungsverhältnis (n) des Wandlers, und dividiert durch das Produkt der Ausgangsspannung ($V_S$) des Wandlers mit dem Wirkungsgrad ($\eta$) des Wandlers.

4. Verfahren nach einem der Ansprüche 1 und 2, dadurch gekennzeichnet, daß der elektrische Wandler von der Art fly-back mit nie entmagnetisierter Induktanz ist, daß die erste Spannung für das Produkt des Mittelwerts (Ipm) des gepulsten Stroms mit dem zyklischen Verhältnis (1 - $\alpha$) der Unterbrechungen dieses Stroms repräsentativ ist und daß die zweite Spannung für die maximale Nutzleistung des Wandlers multipliziert mit dem Übersetzungsverhältnis (n) und dem ersten zyklischen Verhältnis ($\alpha$) und dividiert durch das Produkt der Ausgangsspannung ($V_S$) des Wandlers mit dem Wirkungsgrad ($\eta$) dieses Wandlers repräsentativ ist.

5. Verfahren nach einem der Ansprüche 1 und 2, dadurch gekennzeichnet, daß der elektrische Wandler von der Art fly-back mit periodisch entmagnetisierter Induktanz ist und daß die erste Spannung für das Produkt

$$Ipm \times (toff\text{-}tm)/T$$

repräsentativ ist, wobei

Ipm  der Mittelwert des gepulsten Stroms ist,

toff  das Zeitintervall zwischen den Impulsen des gepulsten Stroms darstellt und

tm  die Zeitperiode darstellt, während der die Spannung an den Klemmen der Primärwicklung ($B_1$) der Induktanz ($L_2$) des Wandlers

sich annuliert,

T die Periode der Unterbrechung des gepulsten Stroms darstellt, und daß die zweite Spannung für das Produkt

$$K \times ton/T$$

repräsentativ ist, wobei

K ein Wert repräsentativ für die maximale Nutzleistung des Wandlers multipliziert mit dem Übersetzungsverhältnis (n) des Wandlers und dividiert durch das Produkt der Ausgangsspannung ($V_S$) des Wandlers mit dem Wirkungsgrad ($\eta$) dieses Wandlers ist.

6. Verfahren nach einem der vorhergehenden Ansprüche, dadurch gekennzeichnet, daß die Produkte aus einem Wert und einem zyklischen Verhältnis erhalten werden, indem alternativ eine für diesen Wert repräsentative Spannung und ein Bezugspotential (0V) auf eine Filterzelle der Art Integrator während Zeitspannen geleitet werden, die je für das zyklische Verhältnis repräsentativ sind.

7. Vorrichtung zur Anwendung des Verfahrens nach einem der vorhergehenden Ansprüche, wobei diese Vorrichtung den Schutz eines Wandlers vor Überlastungen gewährleistet, der mit einem von einer Primärquelle (VE) kommenden und gemäß einem ersten zyklischen Verhältnis ($\alpha$) gepulsten Strom gespeist wird, und die zu diesem Zweck eine erste Filterzelle ($R_6$, $C_6$, $IC_1$), an die eine für die Stromstärke (Ip) dieses gepulsten Stroms repräsentative Spannung angelegt wird, wobei diese erste Filterzelle ($R_6$, $C_6$, $IC_1$) so ausgebildet ist, daß sie eine Ausgangsspannung ($V_4$) liefert, die für den Mittelwert (Ipm) der Stromstärke (Ip) repräsentativ ist, und einen Komparator ($IC_2$) aufweist, der eine erste Spannung ($V_5$), die von der Ausgangsspannung ($V_4$) abhängt, mit einer zweiten Spannung ($V_6$) vergleicht, die von einer Bezugsspannung ($V_{ref}$) abhängt, wobei dieser Komparator ($IC_2$) ein Fehlersignal liefert, das eine Begrenzung der vom Wandler gelieferten Leistung steuert, wenn die erste Spannung ($V_5$) die zweite Spannung ($V_6$) erreicht oder größer wird als diese, dadurch gekennzeichnet, daß sie aufweist

- eine erste Integrierschaltung ($R_7$, $C_7$), deren Eingang alternativ mittels eines ersten Schalters ($S_4$) mit dem Ausgang der ersten Filterzelle ($R_6$, $C_6$, $IC_1$) bzw. mit einem Bezugspotential (OV) verbunden sein kann, wobei diese erste Integrierschaltung ($R_7$, $C_7$), es ermöglicht, an ihrem Ausgang die erste Spannung ($V_5$) zu liefern, die für das Produkt dieser Ausgangsspannung ($V_4$) mit einem vom gepulsten Strom abgeleiteten zyklischen Verhältnis repräsentativ ist,
- eine zweite Integrierschaltung ($R_8$, $C_8$), deren

Eingang alternativ mittels eines zweiten Schalters ($S_5$) mit der Bezugsspannung ($V_{ref}$) bzw. mit einem Bezugspotential (OV) verbunden sein kann, wobei diese zweite Integrierschaltung ($R_8$, $C_8$) es ermöglicht, an ihrem Ausgang die zweite Spannung ($V_6$) zu liefern, die für das Produkt der Bezugsspannung ($V_{ref}$) mit dem ersten zyklischen Verhältnis ($\alpha$) repräsentativ ist.

8. Vorrichtung nach Anspruch 7 für einen Wandler, der eine Wandlung in direkter Phase durchführt, dadurch gekennzeichnet, daß der erste Schalter ($S_4$) so gesteuert wird, daß er kontinuierlich an den Eingang der ersten Integrierschaltung ($R_7$, $C_7$) die für die mittlere Stromstärke (Ipm) des gepulsten Stroms repräsentative Spannung anlegt, und daß der zweite Schalter ($S_5$) so gesteuert wird, daß er die Bezugsspannung ($V_{ref}$) an die zweite Integrierschaltung ($R_8$, $C_8$) während Zeitperioden ton überträgt, die den Impulsen des gepulsten Stroms entsprechen, und eine Nullspannung während Zeitperioden toff, die den Intervallen zwischen den Impulsen dieses Stroms entsprechen.

9. Vorrichtung nach Anspruch 7 für einen Wandler der Art fly-back mit unvollständiger Entmagnetisierung, dadurch gekennzeichnet, daß der erste Schalter ($S_4$) so gesteuert wird, daß er an den Eingang der ersten Integrierschaltung ($R_7$, $C_7$) die für die mittlere Stromstärke (Ipm) des gepulsten Stroms (Ip) repräsentative Spannung während der Zeitperioden toff anlegt, die den Intervallen zwischen den Impulsen des gepulsten Stroms entsprechen, und eine Nullspannung während der Zeitperioden ton, die diesen Impulsen entsprechen, und daß der zweite Schalter ($S_5$) so gesteuert wird, daß er an den Eingang der zweiten Integrierschaltung ($R_8$, $C_8$) die Bezugsspannung ($V_{ref}$) während der Zeitperioden ton anlegt, die diesen Impulsen entsprechen, und eine Nullspannung während der Zeitperioden toff, die den Intervallen zwischen den Impulsen entsprechen.

10. Vorrichtung nach Anspruch 7 für einen Wandler der Art fly-back mit vollständiger Entmagnetisierung, dadurch gekennzeichnet, daß der erste Schalter ($S_4$) so gesteuert wird, daß er an den Eingang der ersten Integrierschaltung ($R_7$, $C_7$) die für die mittlere Stromstärke (Ipm) des gepulsten Primärstroms (Ip) repräsentative Spannung während der Intervalle toff-tm der Periode (T) des gepulsten Stroms anlegt, wobei toff das Zeitintervall zwischen den Impulsen des gepulsten Stroms und tm die Zeit dieser Periode ist, während der die Spannung an den Klemmen der Primärwicklung ($B_1$) der Induktanz ($L_2$) des Wandlers sich annuliert, und daß der zweite Schalter ($S_5$) so gesteuert wird, daß er an den Eingang der zweiten Integrierschaltung ($R_8$, $C_8$) die Bezugsspannung

($V_{ref}$) während der Zeitperioden ton anlegt, die diesen Impulsen entsprechen, und eine Nullspannung während der Zeitperioden toff, die den Intervallen zwischen den Impulsen entsprechen.

11. Vorrichtung nach einem der Ansprüche 7 bis 10, dadurch gekennzeichnet, daß die erste Filterzelle eine Schaltung enthält, die in Serie einen Widerstand ($R_6$) und einen mit Masse verbundenen Kondensator ($C_6$) aufweist, wobei die am Verbindungspunkt zwischen diesem Widerstand ($R_6$) und diesem Kondensator ($C_6$) vorhandene Spannung an den Eingang eines Operationsverstärkers ($IC_1$) mit regelbarem Verstärkungsgrad angelegt wird.

12. Vorrichtung nach Anspruch 10, dadurch gekennzeichnet, daß der erste Schalter ($S_4$) von einem Signal gesteuert wird, das am Kollektor eines Transistors ($T_1$) entnommen wird, dessen Basis von einer Spannungsteilerbrücke ($R_2$, $R_3$) polarisiert wird, die in Serie in einer Schaltung angeordnet ist, welche eine Diode ($D_3$) und eine Sekundärwicklung ($B_3$) der Induktanz ($L_2$) des Wandlers enthält, dessen Primärwicklung ($B_1$) von diesem von der Primärquelle (VE) kommenden gepulsten Strom durchflossen wird.

**Claims**

1. Method of protecting against overloads an electrical converter supplied with a current ($I_p$) supplied by a primary source (VE) and pulsed according to a first duty factor ($\alpha$), said method consisting in :

   - producing a first voltage representing the mean value ($I_{pm}$) of the pulsed current or the product of this mean value ($I_{pm}$) and a second duty factor derived from the pulsed current ;
   - producing a second voltage ($K\alpha$) representing the product of the maximum wanted power of the converter and the first duty factor ($\alpha$) ; and
   - comparing said first and second voltages and limiting the output power of the converter if the first voltage becomes greater than the second.

2. Method according to claim 1, characterized in that said first duty factor ($\alpha$) of the pulsed current is varied to maintain the converter output voltage constant.

3. Method according to one of claims 1 and 2, characterized in that the electrical converter is of the forward conversion type, in that said first voltage represents the mean value ($I_{pm}$) of the pulsed current, and in that said second voltage represents the maximum wanted power of the converter multiplied by said first duty factor ($\alpha$) of the pulsed currrent and by the transformer ratio (n) of the converter and divided by the product of the converter output voltage ($V_S$) and the converter efficiency ($\eta$).

4. Method according to one of claims 1 and 2, characterized in that the electrical converter is of the flyback type with an inductor that is never demagnetized, and in that said first voltage represents the product of the mean value ($I_{pm}$) of the pulsed current and the duty factor ($I-\alpha$) of interruptions of said current, and in that said second voltage represents the maximum wanted power of the converter multiplied by the transformer ratio (n) and said first duty factor ($\alpha$) and divided by the product of the converter output voltage ($V_S$) and the converter efficiency ($\eta$).

5. Method according to one of claims 1 and 2, characterized in that the electrical converter is of the flyback tyype with periodically demagnetized inductor, and in that said first voltage represents the product :

$$I_{pm} \text{ x (toff - tm)/T}$$

in which $I_{pm}$ is the mean value of the pulsed current, toff represents the time interval between the pulses of the pulsed current, tm represents the time period during which the voltage across the terminals of the primary winding ($B_1$) of the converter inductor ($L_2$) is cancelled out, and T represents the switch period of said pulsed current, and in that said second voltage represents the product :

$$K \text{ x ton/T}$$

where K is a value representing the maximum wanted power of the converter multiplied by the transformer ratio (n) of the converter and divided by the product of the converter output voltage ($V_S$) and the converter efficiency ($\eta$).

6. Method according to one of the preceding claims, characterized in that the product of a value and a duty factor are obtained by alternately routing a voltage representing the said value and a reference potential (OV) to an integrator-type filter during respective time lapses representing said duty factor.

7. Device for implementing the method according to one of the preceding claims, said device protecting against overloads a converter supplied with a current by a primary source (VE), said current being pulsed according to a first duty factor ($\alpha$), said device comprising to this effect a first filter ($R_6$, $C_6$, $IC_1$) to which is applied a voltage representing the value ($I_p$) of said pulsed current, said first filter ($R_6$, $C_6$, $IC_1$) being designed to supply an output voltage ($V_4$) representing the mean value ($I_{pm}$) of said current ($I_p$), and a comparator ($IC_2$) which compares a first voltage ($V_5$) which depends on said output voltage ($V_4$) with a second voltage ($V_6$) which depends on a reference voltage ($V_{ref}$), said comparator ($IC_2$) supplying a fault signal for commanding a limitation of the power supplied by the converter when the first voltage ($V_5$) reaches or exceeds the second voltage ($V_6$),

characterized in that it comprises :

- a first integrator circuit ($R_7$, $C_7$) whose input is adapted to be connected alternately by a first switch ($S_4$) to the output of the first filter ($R_6$, $C_6$, $IC_1$) and to a reference potential (OV), said first integrator circuit ($R_7$, $C_7$) supplying at its output said first voltage ($V_5$) representing the product of said output voltage ($V_4$) and a duty factor derived from the pulsed current ;

- a second integrator circuit ($R_8$, $C_8$) whose input is adapted to be alternately connected by a second switch ($S_5$) to the reference voltage ($V_{ref}$) and to a reference potential (OV), said second integrator circuit ($R_8$, $C_8$) supplying at its output said second voltage ($V_6$) representing the product of the reference voltage ($V_{ref}$) and said first duty factor ($\alpha$).

8. Device according to claim 7 for use in a forward type converter,
characterized in that said first switch ($S_4$) is controlled so as to apply continuously to the input of the first integrator circuit ($R_7$, $C_7$) the voltage representing the mean pulsed current ($I_{pm}$), and in that the second switch ($S_5$) is controlled in such a way as to transmit the reference voltage ($V_{ref}$) to the second integrator circuit ($R_8$, $C_8$) during time periods ton representing the pulses of the pulsed current and a null voltage during time periods toff representing the gaps between the pulses of said pulsed current.

9. Device according to claim 7 for use in a flyback partial demagnetization type converter,
characterized in that the first switch (($S_4$) is controlled in such a way as to apply to the input of the first integrator ($R_7$, $C_7$) the voltage representing the mean value ($I_{pm}$) of the pulsed current ($I_p$) during time periods toff corresponding to the gaps between the pulses of the pulsed current and a null voltage during time periods ton corresponding to said pulses, and in that the second switch ($S_5$) is controlled in such a way as to apply the reference voltage ($V_{ref}$) to the input of the second integrator circuit ($R_8$, $C_8$) during the time periods ton corresponding to said pulses, and a null voltage during the time periods toff corresponding to the gaps between said pulses.

10. Device according to claim 7, for use in a flyback full demagnetization type converter,
characterized in that the first switch ($S_4$) is controlled in such a way as to apply to the input of the first integrator circuit ($R_7$, $C_7$) the voltage representing the mean value ($I_{pm}$) of the pulsed primary current ($I_p$) during time intervals toff-tm of the period (T) of the pulsed current, toff being the time interval between the pulses of the pulsed current and tm being the time period during which the voltage across the terminals of the primary winding ($B_1$) of the converter inductor ($L_2$) is cancelled out, and in that the second switch ($S_5$) is controlled in such a way as to apply the reference voltage ($V_{ref}$) to the input of the second integrator circuit ($R_8$, $C_8$) during time periods ton corresponding to said pulses, and a null voltage during time periods toff corresponding to the gaps between said pulses.

11. Device according to one of claims 7 to 10,
characterized in that said first filter comprises a circuit comprising a resistor ($R_6$) in series with a grounded capacitor ($C_6$) and the voltage at the common point of said resistor ($R_6$) and said capacitor ($C_6$) is applied to the input of a variable gain operational amplifier ($IC_1$).

12. Device according to claim 10,
characterized in that said first switch ($S_4$) is controlled by a signal taken at the collector of a transistor ($T_1$) whose base is biased by a voltage divider bridge ($R_2$, $R_3$) connected in series in a circuit comprising a diode ($D_3$) and a secondary winding ($B_3$) of the converter inductor ($L_2$) through the primary winding ($B_1$) of which flows said pulsed current of the primary source (VE).

# FIG. 1

# FIG. 2

FIG.3

FIG.4

FIG.7

FIG. 5

FIG.6